# FASCICULE DE BREVET EUROPEEN

(11) **EP 2 429 834 B1**
(45) Date de publication et mention de la délivrance du brevet: **13.03.2013**
(21) Numéro de dépôt: 10715893.3
(22) Date de dépôt: 04.05.2010
(51) Int. Cl.: B60C 15/06

(54) **ARMATURE DE RENFORCEMENT BI MATÉRIAUX DE RENFORTS ET PNEU COMPORTANT UNE TELLE ARMATURE**
VERSTÄRKUNGSEINLAGE VERSEHEN MIT BI-MATERIAL VERSTÄRKUNGEN UND REIFEN MIT EINER SOLCHEN VERSTÄRKUNGSEINLAGE
REINFORCEMENT LAYER HAVING BI-MATERIAL REINFORCEMENTS AND TIRE COMPRISING SUCH A REINFORCEMENT LAYER

(30) Priorité: 12.05.2009 FR 0953115
(43) Date de publication de la demande: 21.03.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DE-TULLIO, Murielle, F-63100 Clermont-Ferrand (FR); VILLER, Jean-Marc, F-63200 Riom (FR)
(74) Mandataire: Diernaz, Christian
(86) Numéro de dépôt international: PCT/EP2010/056041
(87) Numéro de publication internationale: WO 2010/130601

(56) Documents cités:
- WO-A-2006/079352
- WO-A-2008/074337
- WO-A-2008/148407
- FR-A- 2 291 878
- FR-A- 2 882 691
- FR-A- 2 912 346
- US-A1- 2007 006 958
- US-A1- 2008 178 982

## Description

Le domaine de l'invention concerne une nouvelle armature de renforcement pour renforcer des pneus à carcasse radiale et plus particulièrement des pneus destinés aux véhicules poids lourd de moyen ou fort tonnage tels que camions, tracteurs routiers, bus, remorques. L'invention concerne également un pneu comprenant une telle armature de renforcement.

De tels pneus comportent en règle générale une armature de carcasse constituée d'au moins une nappe caoutchoutée comprenant des renforts métalliques s'étendant sensiblement radialement, c'est-à-dire faisant un angle compris entre 80° et 100° avec la direction circonférentielle, cette nappe étant surmontée radialement à l'extérieur par une armature de sommet composée d'au moins deux nappes de câbles métalliques croisés d'une nappe à la suivante en formant avec la direction circonférentielle des angles compris entre 10° et 45°, elle-même surmontée d'une bande de roulement. En outre, de tels pneus comprennent des flancs reliant des bourrelets à la bande de roulement, chaque bourrelet étant destiné à venir en contact avec une jante de montage. Les extrémités de l'armature de carcasse sont ancrées autour de structures de renforcement circonférentiel des bourrelets (ces structures sont dites tringles d'ancrage) pour former des retournements remontant partiellement vers les flancs.

En outre, les bourrelets comprennent au moins une armature additionnelle de renforcement du retournement de l'armature de carcasse, généralement situé axialement à l'extérieur le long dudit retournement ; cette armature additionnelle est usuellement renforcée par la présence d'une pluralité de renforts métalliques et/ou textiles, ces renforts se présentant de façon connue sous forme de câbles orientés selon un angle faible, c'est-à-dire compris entre 10° et 30° par rapport à la direction circonférentielle sur le pneu. Cette armature additionnelle comprend une extrémité radialement vers l'extérieur qui est située radialement à l'extérieur ou à l'intérieur de l'extrémité du retournement de l'armature de carcasse et une extrémité radialement vers l'intérieur généralement située radialement à l'intérieur d'une droite parallèle à l'axe de rotation et passant par le centre de gravité de la section méridienne de la tringle d'ancrage.

Dans le cas de roulages sévères du point de vue de la charge portée par les véhicules poids lourd et/ou dans le cas de roulages comportant des freinages fréquents, il survient, en raison des déformations radiales et circonférentielles de l'extrémité du retournement de l'armature de carcasse, des déformations de cisaillement dans les matériaux avoisinant ladite extrémités. Ces déformations provoquent, outre une élévation de la température du bourrelet, une fragilisation du matériau caoutchouc situé autour des extrémités des armatures. Cette fragilisation peut se traduire notamment par une amorce de fissuration en extrémité de retournement d'armature de carcasse pour ensuite se propager vers l'extrémité radialement externe de l'armature additionnelle de bourrelet et ensuite se propager vers l'extérieur du pneu imposant alors le retrait du pneu. Cette fissuration ou cassure du matériau caoutchouc semble apparaître d'autant plus rapidement que extrémité du retournement de l'armature de carcasse est radialement plus haute (c'est-à-dire radialement plus éloignée de l'axe de rotation). Si cette extrémité est relativement basse, il est plus difficile d'avoir un ancrage de l'armature de carcasse qui soit satisfaisant en raison de l'élévation des températures dans les bourrelets générées par les températures très élevées des organes de freinage résultant de freinages répétés. Cette élévation de température dans les bourrelet conduit à une perte de rigidité des bourrelets et une fragilisation de l'ancrage de l'armature de carcasse.

Diverses solutions ont été proposées pour remédier à une détérioration du pneu à carcasse radiale dans la zone des bourrelets et plus généralement aux extrémités des armatures.

Pour remédier aux décollements dans les régions des flancs adjacentes aux bourrelets d'un pneu à carcasse radiale résultant de flexions répétées de grande amplitude des flancs très souples, le brevet FR 1.310.491 enseigne l'utilisation combinée de fils ou câbles en matière textile naturelle ou artificielle et de fils ou câbles en métal situés dans un même plan et répartis en proportion convenable selon l'augmentation de résistance recherchée pour constituer les nappes de carcasse ou l'armature de sommet.

Pour des enveloppes de pneus à carcasse radiale, l'utilisation de renforts à structure bi matériaux, c'est-à-dire constitués par des fils ou des câblés en matériaux différents situés dans une même surface, par exemple métalliques et textiles, les fils ou câblés de chaque paire d'un matériau donné voisins pouvant être séparés par un ou plusieurs fil(s) ou câblé(s) du second matériau, est connue. Notamment comme élément de renfort d'une armature de sommet d'après le brevet FR 1.296.859 pour des raisons d'économie, ou d'après la demande de brevet JP 1998-151906 pour améliorer la tenue en virage ou encore d'après la demande JP 1998-314504 pour réduire les vibrations lors d'un roulage à plat.

Le brevet US5634995 décrit une enveloppe de pneu poids lourd à carcasse radiale dont le bourrelet comporte une première armature de renforcement constituée par une nappe de renfort en câbles d'acier faisant le tour de la tringle et une deuxième armature renforcée par des renforts textiles, cette deuxième armature étant située axialement à l'extérieur du retournement de carcasse. La deuxième armature est en partie superposée avec la première armature de manière à ce que l'extrémité axialement extérieure de la première armature soit recouverte par la deuxième armatures.

La demande de brevet FR 2291878-A divulgue, pour éviter une détérioration prématurée du bourrelet d'un pneu pour véhicule poids lourd, une armature de renforcement formée par une seule nappe comprenant, une portion de nappe relativement épaisse en section transversale, comportant des renforts en acier, cette portion de nappe épaisse se terminant radialement à l'intérieur de l'extrémité du retournement de la nappe carcasse et une portion de moindre épaisseur qui prolonge la portion de nappe épaisse et dont l'extrémité radialement la plus à l'extérieur est située radialement au delà de l'extrémité du retournement de la nappe carcasse. Cette portion de moindre épaisseur comporte des renforts de rigidité inférieur à la rigidité des renforts de la portion de nappe épaisse, par exemple des câbles textiles. Cette solution a l'inconvénient de présenter d'une part une extrémité du retournement de la nappe carcasse qui remonte relativement haut dans le bourrelet ce qui peut favoriser l'apparition d'une fissure en extrémité du retournement de la nappe carcasse et d'autre part une discontinuité entre les deux matériaux de renforcement ce qui peut favoriser l'apparition d'une cassure à la jonction des deux matériaux qui sont mis dans le prolongement l'un de l'autre ou bien se recouvrent sur une petite longueur.

Définitions :

Plan équatorial : le plan perpendiculaire à l'axe de rotation et divisant la bande de roulement sensiblement en deux parties d'égales largeurs.

Plan radial (ou plan méridien) : plan contenant l'axe de rotation.

Direction radiale : une direction perpendiculaire à l'axe de rotation.

Direction circonférentielle : une direction tangente à un cercle centré sur l'axe de rotation.

Direction axiale : direction parallèle à l'axe de rotation du pneu. Un point est dit axialement à l'intérieur d'un autre point dès lors que sa distance au plan équatorial du pneu est inférieure à la distance de l'autre point par rapport au même plan équatorial.

Un point d'un pneu est dit radialement à l'intérieur d'un autre point dès lors que sa distance à l'axe de rotation du pneu est inférieure à la distance de l'autre point par rapport audit axe.

Par renfort ou élément de renfort, on entend aussi bien des fils que des câbles. Un fil peut être constitué par un fil unique monofilamentaire ou multifilamentaire. Un câble est constitué par l'assemblage d'au moins deux fils.

Par renfort inextensible, on entend ici un renfort qui présente une déformation nulle voire quasi nulle pour les efforts usuels supportés dans le pneu ; ces renforts inextensibles peuvent être soit de nature métallique comme un fil métallique ou un assemblage de plusieurs fils métalliques.

Par renfort extensible, on entend ici un renfort ayant un allongement d'au moins 3% à la rupture. Ce renfort est choisi notamment dans le groupe des renforts comprenant les renforts polyester, polyamide, fibres de verre, rayonne, polyvinyl alcohol, polyamide aromatique (aramide), polycétone.

L'objet de l'invention est d'améliorer l'endurance des parties du pneu comportant des extrémités d'armatures entourées de matériau caoutchoutique. En particulier, mais non exclusivement, cette invention s'applique aux bourrelets d'un pneu pour équiper un véhicule poids lourd, et permet de minimiser les déformations radiales et circonférentielles subies par les matériaux caoutchouc au niveau des extrémités des armatures de renforcement de bourrelet (armature de carcasse et/ ou armatures additionnelles).

Dans ce but, il est proposé une armature de renforcement utilisable comme armature d'un pneu, cette armature de renforcement ayant une structure bi-matériaux de renforts constituée par au moins une pluralité de premiers renforts extensibles, et au moins une pluralité de deuxièmes renforts inextensibles. Ces premiers et deuxièmes renforts sont parallèles entre eux et répartis d'une manière alternée en proportion appropriée pour atteindre le niveau de renforcement recherché, ces premiers et deuxièmes renforts étant situés dans une même surface moyenne (voire sensiblement une même surface moyenne). Les premiers renforts extensibles sont couplés aux deuxièmes renforts inextensibles sur une longueur de couplage Lc qui est inférieure à la longueur L1 des premiers renforts extensibles, de manière que chacun des premiers renforts et deuxièmes renforts ayant deux extrémités, l'une au moins des extrémités des premiers renforts soit décalée par rapport aux deux extrémités des deuxièmes renforts.

Dans ce qui suit, il est entendu qu'une structure ou armature bi-matériaux de renforts est constituée par au moins une pluralité de premiers renforts extensibles et au moins une pluralité de deuxièmes renforts inextensibles, ces premiers et deuxièmes renforts étant enrobés dans au moins un matériau à base de caoutchouc.

Préférentiellement, la différence entre les longueurs des premiers renforts extensibles et la longueur de couplage entre les premiers et deuxièmes renforts de l'armature de renforcement selon l'invention est au moins égale à 15 mm.

Avantageusement l'armature de renforcement de pneu selon l'invention est telle que l'angle des deuxièmes renforts dans la partie de couplage est compris entre 15 et 45 degrés et l'angle des premiers renforts extensibles dans la partie située hors du couplage entre les premiers et les deuxièmes renforts est au moins égal à 75 degrés, ces angles étant pris par rapport à la direction de plus grande dimension de l'armature de renforcement. Préférentiellement, la différence entre l'angle B des premiers renforts extensibles dans la partie située hors du couplage entre les premiers et les deuxièmes renforts et l'angle A des renforts dans la partie de couplage est au plus égale à 60 degrés

Selon une utilisation particulièrement avantageuse de l'armature bi matériaux conforme à l'invention, celle-ci est employée comme armature de renforcement d'un bourrelet de pneu. Dans cette utilisation, un pneu comprend une armature de carcasse radiale constituée d'au moins une nappe caoutchoutée comprenant des renforts inextensibles s'étendant radialement, surmontée par une armature de sommet composée d'au moins deux nappes de câbles métalliques croisés d'une nappe à la suivante, elle-même surmontée d'une bande de roulement, des flancs reliant la base des talons des bourrelets à la bande de roulement, chaque bourrelet comprenant au moins une structure de renforcement circonférentiel (de type tringle par exemple) autour de laquelle est enroulée l'armature de carcasse pour former un retournement et au moins une armature additionnelle de renforcement. Ce pneu se caractérise en ce que l'armature additionnelle a une structure bi matériaux constituée par une pluralité de premiers renforts extensibles, et une pluralité de deuxièmes renforts inextensibles, répartis en alternance et en proportion appropriée selon le niveau de renforcement recherché, ces premiers et deuxièmes renforts étant situés sensiblement sur une même surface moyenne et parallèles entre eux, les premiers renforts extensibles étant couplés aux deuxièmes renforts inextensibles sur une partie de couplage ayant une longueur Lc (dite longueur de couplage) qui est inférieure à la longueur L1 des premiers renforts extensibles, de manière que chacun des premiers et deuxièmes renforts ayant deux extrémités, l'une au moins des extrémités des premiers renforts extensibles est décalée par rapport aux deux extrémités des deuxièmes renforts inextensibles.

Préférentiellement l'extrémité radialement la plus à l'extérieur correspond à l'une des extrémités des renforts extensibles.

Par partie de couplage entre des premiers et deuxièmes renforts, il faut comprendre la partie de l'armature de renforcement dans laquelle lesdits premiers et deuxièmes renforts sont présents en alternance sur une même surface moyenne.

Avantageusement l'armature de renforcement bi matériaux utilisée comme armature de renforcement de bourrelet d'un pneu est telle que l'inclinaison des renforts extensibles, dans la partie située hors du couplage entre les premiers et les deuxièmes renforts, est différente de l'inclinaison des renforts dans la partie de couplage. Lorsque l'angle des renforts extensibles dans cette partie se rapproche ou est égal à 90 degrés avec la direction circonférentielle, il est possible d'augmenter la rigidité latérale de la partie correspondante du pneu et avoir une coopération avec les renforts de l'armature de carcasse pour notamment réduire les efforts dans ladite armature de carcasse.

De façon préférentielle, le pneu poids lourd est tel que l'extrémité radialement la plus à l'extérieur des premiers renforts extensibles de l'armature additionnelle est, dans un plan de coupe radial, à une distance de l'axe de rotation qui est supérieure à la distance de l'extrémité du retournement de l'armature de carcasse par rapport au même axe de rotation, l'extrémité radialement à l'extérieur des renforts inextensibles étant à une distance de l'axe de rotation qui est inférieure à celle qui sépare l'extrémité du retournement du même axe.

Dans une variante de pneu selon l'invention, les premiers renforts extensibles s'étendent radialement de part et d'autre des deuxièmes renforts inextensibles, la partie radialement la plus à l'intérieur des premiers renforts étant engagée au moins en partie radialement à l'intérieur par rapport à la tringle de bourrelet.

Cette dernière variante de pneu peut encore être améliorée en prévoyant que les premiers renforts extensibles dans les parties qui s'étendent respectivement radialement à l'intérieur et à l'extérieur des deuxièmes renforts inextensibles sont parallèles entre eux et s'étendent dans une même direction et selon un angle différent de celui des deuxièmes renforts.

Afin d'augmenter encore l'endurance des bourrelets d'un pneu poids lourd, il est avantageux que chaque bourrelet comporte une deuxième armature additionnelle bi matériaux, les renforts des deux armatures additionnelles étant croisés entre eux au moins sur la partie de couplage des premiers et deuxièmes renforts de chaque armature. Dans cette variante, les extrémités radialement les plus à l'extérieur des premiers renforts extensibles de chacune des armatures additionnelles sont situées radialement à un niveau supérieur à celui des extrémités radialement supérieures des deuxièmes renforts de chaque armature.

Dans une autre variante préférentielle, l'armature bi matériaux est employée comme armature de carcasse d'un pneu. Cette dernière variante pouvant avantageusement être combinée avec la variante selon laquelle l'armature additionnelle comprend des premiers renforts extensibles et des deuxièmes renforts inextensibles.

Dans une autre application d'une armature de renforcement bi matériau selon l'invention, il est également avantageux de réaliser au moins une armature de sommet du pneu.

Il est avantageux que les différentes extrémités des renforts de l'armature de carcasse et des armatures additionnelles soient toutes décalées les unes par rapport aux autres dans le pneu.

Les recherches des demanderesses ont permis d'arriver à la conclusion qu'une armature bi-matériaux de renforts conforme à l'invention, c'est-à-dire ne présentant pas de discontinuité ou de superposition entre les renforts dans l'épaisseur de l'armature, permet de réduire significativement le risque de dégradation du matériau caoutchouc situé à l'extrémité de l'armature bi-matériaux. En conséquence, il est possible de retarder la propagation d'une fissure vers l'extérieur du bourrelet, et donc d'améliorer l'endurance des bourrelets (c'est-à-dire la distance parcourue par le pneu) ainsi construits.

En outre, la constitution même de l'armature bi-matériaux permet, pour une performance donnée, un gain de matière donc un gain de poids.

Les renforts inextensibles et les renforts extensibles constituant une armature bi-matériaux selon l'invention sont de préférence gainés, c'est-à-dire recouvert d'une fine épaisseur de matériau caoutchouc. Ces renforts inextensibles et extensibles dans une même armature peuvent alterner à titre unitaire ou par groupes de deux ou plus en proportion convenable selon le niveau de renforcement recherché. Ainsi à titre d'exemple, un fil métallique peut alterner avec un groupe de trois fils textiles ou un groupe deux fils métalliques peuvent alterner avec un fil textile.

Dans une forme d'exécution préférentielle, l'invention s'applique à des pneus dont le rapport de la hauteur sur jante sur sa largeur axiale maximale est au plus égal à 0.90.

Selon une forme préférentielle d'exécution de l'invention, chaque bourrelet de pneu comporte deux armatures additionnelles bi matériaux, chacune desdites armatures étant constituées par des premiers et deuxièmes renforts disposés en alternance et situés sensiblement dans une même surface moyenne, orientés dans une même direction et parallèles entre eux, les éléments de renfort des deux armatures additionnelles bi matériaux étant croisés entre eux, de préférence symétriquement (c'est-à-dire que la bissectrice de l'angle formé par les renforts croisés est sensiblement contenu dans un plan passant par l'axe de rotation).

La présence de deux armatures additionnelles selon l'invention est particulièrement bénéfique pour l'endurance des bourrelets en roulage sous forte surcharge et sous freinage fréquents ou sévères.

Selon une variante d'exécution supplémentaire des différentes variantes décrites ci dessus du renfort de bourrelet comportant une ou deux armatures additionnelles bi matériaux, le bourrelet comprend en outre, axialement entre la ou les deux armature(s) additionnelle(s) bi matériaux et le retournement de l'armature de carcasse, une armature additionnelle renforcée par des renforts métalliques continus ou discontinus parallèles entre eux dans une nappe de caoutchouc et faisant avec la direction circonférentielle un angle égal à ou proche de zéro degré (c'est-à-dire tangents à des cercles centrés sur l'axe de rotation).

Une armature de renforcement bi matériaux selon l'invention constituée par des premiers renforts extensibles et des deuxièmes renforts inextensibles disposés en alternance et situés dans une même surface moyenne, ces premiers et deuxièmes renforts étant orientés selon une même direction, peut être obtenue d'une manière connue en soi par l'un ou l'autre des procédés décrits ci après.

Dans un mode de réalisation on fabrique un tissu comportant des éléments de renforts métalliques (correspondant aux deuxièmes renforts), de préférence gainés, posés sur une couche de caoutchouc non vulcanisée ou prévulcanisée usuellement utilisée pour le calandrage de nappes. En outre on réalise de manière séparée un tissu comportant des renforts textiles (correspondant aux premiers renforts), de préférence gainés, posés sur une couche identique de caoutchouc usuellement utilisée pour le calandrage de nappes, puis superposition des deux tissus de façon à placer les renforts en textile en alternance, c'est-à-dire intercalés, avec les renforts métalliques pour réaliser l'arnature comportant les deux renforts situés sensiblement dans une même surface moyenne. Une fois superposés, l'ensemble des deux renforts est soumis à une compression forçant les premiers renforts à s'intercaler entre les deuxièmes renforts.

Selon un autre mode de fabrication, on prépare un tissu droit fil comprenant une alimentation en renforts textiles et métalliques, puis on réalise deux coupes de ce tissu : une première dans toute sa largeur selon un angle correspondant à l'angle d'inclinaison des renforts dans l'armature et une deuxième en zigzag pour générer des longueurs de renforts en textile plus grandes que les longueurs de renforts métalliques. Après avoir obtenu des tronçons de nappe, on les assemble afin d'obtenir une armature selon l'invention.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 à 6 montrent des variantes d'armature de renforcement pour pneu selon l'invention :

La figure 7 montre une structure de renforcement de pneu comprenant deux armatures selon l'invention :

La figure 8 montre une première méthode d'obtention d'une armature de renforcement selon l'invention ;

La figure 9 montre une deuxième méthode d'obtention d'une armature de renforcement selon l'invention ;

La figure 10 montre une coupe radiale d'un bourrelet de pneu pour poids lourd comprenant une armature de renforcement selon l'invention ;

La figure 11 montre une vue schématique et en plan d'une partie du bourrelet représenté à la figure 10;

La figure 12 montre une coupe radiale d'un bourrelet de pneu pour poids lourd comprenant une armature de renforcement selon une variante de l'invention

La figure 13 montre une coupe d'un bourrelet d'un pneu dont l'armature de carcasse est formée d'une armature de renforcement selon l'invention ainsi que l'armature additionnelle de renforcement de bourrelet.

Pour faciliter la lecture des figures et de la description associée, les mêmes références sont employées pour désigner des éléments structurels identiques quelle que soit la variante considérée.

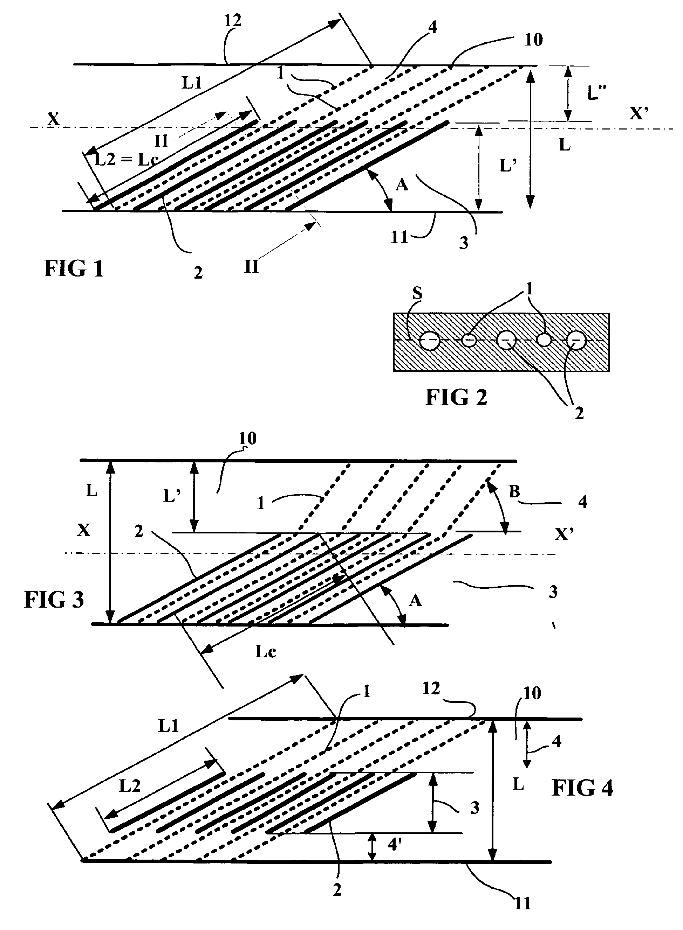

La figure 1 est une vue schématique en plan d'une armature de renforcement 10 selon l'invention, cette armature de largeur L comportant deux bords 11 et 12. Cette armature de renforcement 10 comprend, enrobés dans un matériau à base de caoutchouc, une pluralité de deux renforts, des premiers renforts extensibles 1 en textile en alternance avec des deuxièmes renforts métalliques inextensibles 2 pour former, sur une longueur Lc inférieure à la largeur totale L de l'armature de renforcement, une partie de couplage 3, ces renforts extensibles et inextensibles étant situés, dans cette partie de couplage 3, sensiblement dans une même surface moyenne et inclinés dans l'armature de renforcement 10 selon un angle A avec la direction de plus grande longueur de l'armature (repérée sur la figure 1 par l'axe XX'). Les renforts métalliques inextensibles 2 ont une longueur L2 et les renforts extensibles textiles 1 une longueur L1 supérieure à la longueur L2 des renforts métalliques. Dans cette variante, les renforts métalliques et textiles ont une extrémité commune située sur un bord 11 de l'armature de renforcement. Seuls les renforts textiles 1 s'étendent jusqu'à l'autre bord 12 de l'armature de renforcement 10 dans une partie 4, complétant l'armature au delà de la partie de couplage 3 et avant sur une largeur de l'armature L" égale à la différence entre L et L'. Dans le cas présenté, la longueur de couplage entre les renforts extensibles et inextensibles est ici égale à la longueur L2 des renforts inextensibles, cette longueur de couplage pourrait être réduite mais devrait toutefois rester supérieure à 50% de la longueur des renforts inextensibles 2.

Sur la figure 2, montrant une coupe de l'armature de renforcement 10 selon la ligne II-II prise sur la figure 1, on voit que les renforts textiles 1 et métalliques 2 sont disposés en alternance (un pour un) sur une même surface moyenne S.

La figure 3 est une vue schématique d'une armature de renforcement 10 de largeur L selon l'invention, comparable à l'armature montrée avec la figure 1, la seule différence résidant dans le fait que dans la partie 4 de l'armature de largeur L" où ne sont présents que les renforts extensibles textiles 1, l'angle B desdits renforts dans cette partie est différent de l'angle A formés par les renforts métalliques 2 et textiles 1 dans la partie 3 de couplage de largeur L'. Grâce à ces inclinaisons différentes, il est possible d'obtenir une modification de la rigidité de flexion autour de l'axe XX' de la partie 4 où ne sont présents que les renforts extensibles. En orientant les renfort extensibles 1 davantage dans une direction perpendiculaire à la direction XX', on peut augmenter cette rigidité de flexion de la partie 4 de l'armature où ne sont présents que les renforts extensibles.

La figure 4 est une vue en plan d'une variante selon l'invention d'une armature de renforcement 10 semblable à l'armature décrite avec le support de la figure 1 mais selon laquelle les renforts extensibles 1 s'étendent de part et d'autre des renforts inextensibles 2 jusqu'aux bords 11 et 12 de ladite armature. Dans ce cas, on a une partie 3 de couplage des renforts extensibles 1 et des renforts inextensibles 2 qui est encadrée par des parties 4 et 4' ne comportant que des renforts extensibles. Dans la variante montrée à la figure 4, les inclinaisons des renforts extensibles et inextensibles sont identiques.

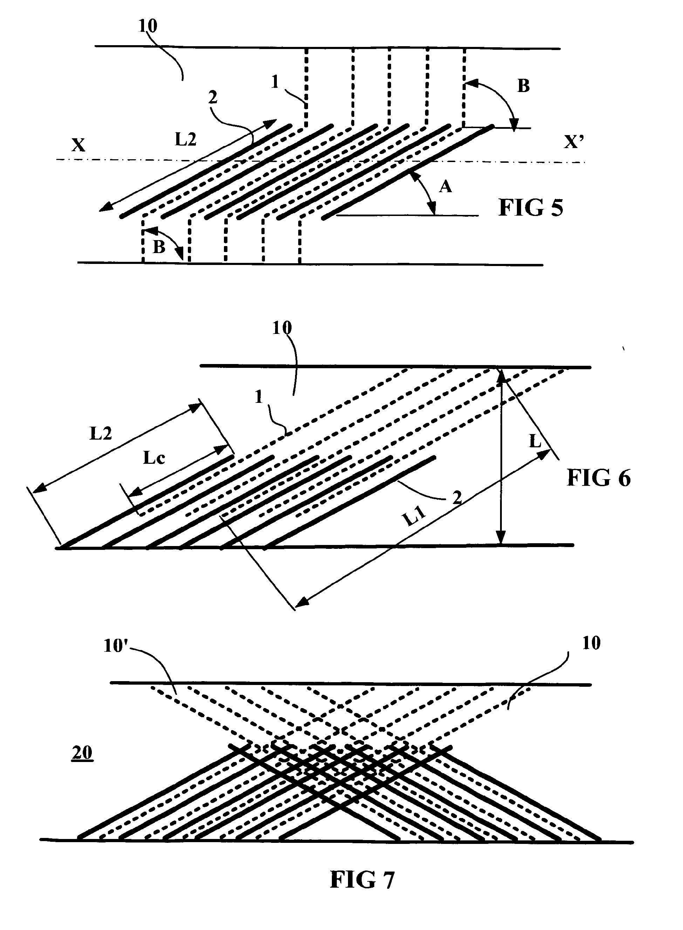

La figure 5 est une vue en plan d'une autre variante d'une armature de renforcement 10 selon l'invention semblable à l'armature montrée avec la figure 4 mais selon laquelle, dans les parties de non couplage 4 et 4', les renforts extensibles 2 font un angle B de 90 degrés par rapport à la direction XX' de plus grande dimension de ladite armature tandis que les renforts dans la partie de couplage font un angle A différent de 90 degrés avec la direction XX'. Dans le cas présent, l'angle A est compris entre 20 et 50 degrés. Cet angle A peut être constant sur toute la partie de couplage ou bien être variable.

La figure 6 montre une autre variante d'une armature de renforcement 10 selon l'invention, selon laquelle, la longueur de couplage Lc entre les renforts métalliques 2 et les renforts textiles 1 est inférieure à la longueur L1 des renforts métalliques. Dans cette variante, sur un bord 11 de l'armature de renforcement sont localisées uniquement des extrémités des renforts métalliques 2 et sur l'autre bord 12 de l'armature de renforcement sont localisées uniquement des extrémités des renforts textiles 1.

La figure 7 est une vue d'une armature de renforcement 20 formée par la superposition de deux armatures de renforcement 10 et 10' identiques selon l'invention correspondant chacune à l'armature de renforcement montrée avec les figures 1 et 2, lesdites deux armatures de renforcement étant superposées l'une sur l'autre de manière à ce que les premiers et deuxièmes renforts d'une armature soient croisés par rapport aux premiers et deuxièmes renforts de l'autre armature. Dans le cas présent, les extrémités des deux armatures de renforcement superposées sont positionnées de manière à coïncider dans la largeur de l'armature de renforcement 20. Ainsi les extrémités des renforts extensibles desdites armatures de renforcement superposées sont situées au même endroit dans la largeur de l'armature. Dans une variante non montrée, cette superposition de deux (ou davantage) armatures de renforcement bi matériaux peut être réalisée de manière à ce que les extrémités des renforts inextensibles soient décalées au moins à une de leurs extrémités afin d'atténuer les discontinuités de rigidité.

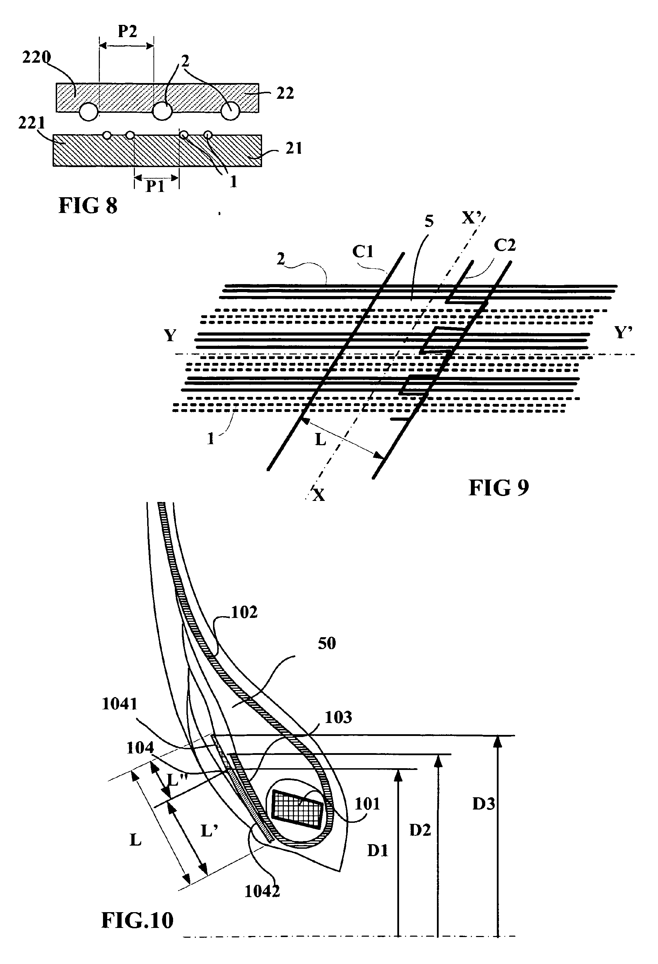

La figure 8 est une vue en coupe de deux nappes 21, 22 avant assemblage pour former une armature de renforcement 10 selon l'invention. Une première nappe 21 est formée d'une pluralité de groupements de deux câbles extensibles textiles 1 partiellement enrobés de matériau caoutchouc 210. Une deuxième nappe 22 comprend une couche de matériau caoutchouc 220 de même nature que celui de la première nappe 21 et enrobant en partie seulement la section d'une pluralité de câbles inextensibles métalliques 2 disposés de façon à être parallèles à une même direction et avec une distance inter câbles P2 appropriée pour permettre de venir intercaler, entre chaque paire de câbles métalliques 2, deux câbles textiles 1 de la première nappe 21 (ces derniers étant séparés deux à deux par une distance P1 également appropriée). Par pressage l'une contre l'autre des première et deuxième nappes 21 et 22, on obtient une armature de renforcement selon l'invention comprenant des renforts métalliques et textiles en alternance et situés sensiblement sur une même surface moyenne. Pour réaliser l'armature selon l'invention, la deuxième nappe s'étend dans la direction des câbles au delà de l'extrémité des câbles métalliques 1 sur une longueur appropriée et sur au moins un côté.

La figure 9 montre une vue d'un tissu de renforcement réalisé par calandrage d'une pluralité de renforts métalliques 2 et de renforts textiles 1 orientés parallèlement à une même direction YY'. L'alternance dans la région de couplage des renforts métalliques et textiles est, dans le cas présent, de trois renforts métalliques encadrés par trois renforts textiles, mais bien entendu toute autre alternance (notamment des nombres différents de renforts de chaque type) peut être choisie par la personne du métier selon la destination de l'armature de renforcement. Après obtention d'une nappe dont les renforts sont orientés suivant la direction de plus grande longueur (repérée sur la figure par l'axe YY'), on procède à une première coupe oblique C1 de l'ensemble des renforts suivant une direction faisant un angle A par rapport à la direction YY' et une deuxième coupe C2 selon une ligne formant un zigzag de manière à ce que les renforts textiles 1 présentent une plus grande longueur que les renforts métalliques 2 pour former un tronçon 5 de largeur L correspondant à la largeur de l'armature de renforcement selon l'invention. En joignant ensemble plusieurs tronçons ainsi préparés, on réalise une armature de renforcement selon l'invention dont les renforts métalliques et textiles sont inclinés d'un angle A par rapport à la direction de plus grande longueur de ladite armature (repérée par l'axe XX' sur la figure 9).

La figure 10 montre un bourrelet d'un pneu selon l'invention pour un pneu de poids lourd de dimension 315/80 R 22.5 destiné à être monté sur une jante comportant des sièges de jante inclinés à 15°. Ce pneu comprend une bande de roulement (non montrée) réunie à deux bourrelets 50 par l'intermédiaire de deux flancs. Chaque bourrelet comprend une tringle 101 constituant une armature de renforcement circonférentiel dudit bourrelet autour de laquelle est enroulée une armature de carcasse 102 formée d'une nappe de câbles métalliques pour former un retournement 103. Ce bourrelet comprend axialement à l'extérieur du retournement 103 de l'armature de carcasse 102 une armature de renforcement 104 selon l'invention, cette armature additionnelle de renforcement, de largeur totale L, a une structure bi matériaux constituée par une pluralité de premiers renforts extensibles et par une pluralité de deuxièmes renforts inextensibles. Cette armature de renforcement correspond sensiblement à l'armature décrite avec le support des figures 1 et 2.

Ici les premiers renforts extensibles sont des câbles textiles en Nylon 66 avec une torsion de 400x400 et les deuxièmes renforts inextensibles sont des câbles métalliques dits "élastiques" de 6 fils de 0.35 mm de diamètre, ces câbles ayant une courbe force allongement présentant une première partie de faible pente (allongement relativement important sous faible effort).

La largeur totale L de l'armature de renforcement 104 est ici égale à 70 mm. Sur une partie de couplage 1042 de largeur L', égale ici à 45 mm, les renforts inextensibles et les renforts extensibles sont couplés mécaniquement entre eux. Sur une partie d'extrémité 1041 longueur L" (égale à 25 mm) seuls sont présents les renforts extensibles ; cette partie d'extrémité 1041 se situe dans le pneu radialement à l'extérieur de la partie de couplage 1042. L'angle des renforts de l'armature de renforcement 104 est compris entre 20 et 25 degrés sur le pneu par rapport à la direction circonférentielle perpendiculaire au plan de la figure.

Les premiers et deuxièmes renforts sont répartis, dans la partie de couplage 1042, d'une manière alternée et en proportion appropriée pour atteindre le niveau de renforcement recherché, ces premiers et deuxièmes renforts étant situés sensiblement dans une même surface moyenne, orientés dans une même direction et parallèles entre eux sur au moins la longueur de juxtaposition commune des premiers et deuxièmes renforts. Les matériaux caoutchouc employés pour cette variante selon l'invention sont identiques à ceux employés pour le pneu de même dimension selon l'art antérieur.

Les extrémités radialement externes des renforts extensibles et inextensibles sont étagées de manière que l'extrémité du retournement de carcasse soit à une distance D2 de l'axe de rotation du pneu comprise entre les distances D1 et D3 respectivement des extrémités des renforts inextensibles et des renforts extensibles de l'armature de renforcement de bourrelet.

Grâce à cette armature de renforcement, il est possible de mieux répartir les efforts au niveau des extrémités et d'augmenter la performance en endurance de fatigue des bourrelets de pneu en conditions de roulage.

Des pneus comportant des bourrelets conformes à l'invention tels que décrits à la figure 10 ont été comparés à des pneus de référence ayant une structure comparable à l'exception de l'armature de renforcement qui était mono matériau d'un point de vue renforcement (identique au renfort métallique de l'armature de renforcement du pneu selon l'invention).

La comparaison a été réalisée dans deux tests pour mesurer l'endurance des bourrelets de pneus poids lourd, à savoir, un test d'endurance en roulage sous forte surcharge et un test d'endurance à un échauffement des bourrelets représentatif de manoeuvres répétées de freinage. Dans des conditions de roulage identiques pour tous les pneus testés, les pneus selon l'invention permettent d'atteindre des kilométrages supérieurs à celui des pneus de référence.

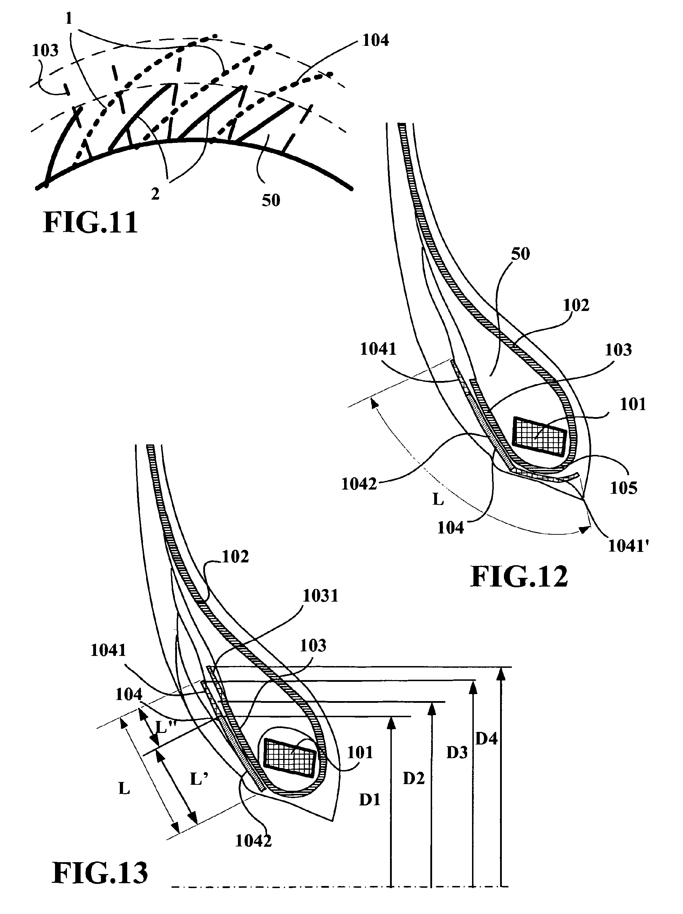

La figure 11 montre une vue en plan d'une partie du bourrelet 50 représenté à la figure 10. Sur cette figure 11, on voit l'armature additionnelle 104 comprenant des renforts extensibles 1 et des renforts inextensibles 2, l'extrémité radialement externe de ladite armature étant formée des extrémités des renforts extensibles 1.

La figure 12 montre en coupe une vue d'un bourrelet 50 d'un pneu comprenant une armature de renforcement 104 selon l'invention placée axialement sur l'extérieur du retournement 103 de l'armature de carcasse 102, cette armature de renforcement 104 ayant une largeur L mesurée dans le plan de la figure. Ce bourrelet a la même structure que celui montré avec la figure 10, la seule différence résidant dans le fait que l'armature de renforcement 104 se prolonge radialement vers l'intérieur de la partie 105 de l'armature de carcasse 102 passant radialement à l'intérieur par rapport à la tringle 101. Plus précisément, l'armature de renforcement 104 comprend une partie d'extension 1041' uniquement renforcée par les renforts extensibles. Par ailleurs, les premiers renforts extensibles (1) dans les parties (1041, 1041') s'étendant respectivement radialement vers l'extérieur et vers l'intérieur des deuxièmes renforts inextensibles sont parallèles entre eux et s'étendent dans une même direction et selon un angle différent de celui des renforts dans la partie de couplage.

Cette solution est particulièrement intéressante puisqu'elle permet d'augmenter la tenue mécanique du pneu sans pour autant pénaliser la tenue mécanique des extrémités de l'armature de renforcement 104.

La figure 13 montre un bourrelet d'un pneu correspondant à une variante selon laquelle l'armature de carcasse 102 et l'armature de renforcement de bourrelet 104 axialement à l'extérieur du retournement 103 de l'armature de carcasse sont chacune une armature bi matériaux de renfort conforme à l'invention. L'armature de carcasse 102 est formée par une pluralité de renforts extensibles et de renforts inextensibles en proportion appropriée, ces renforts étant situés sensiblement sur une même surface moyenne. En outre, les renforts extensibles se prolongent dans le retournement 103 radialement au delà des renforts inextensibles pour former une partie d'extrémité 1031. La longueur du couplage des renforts extensibles et inextensibles de l'armature de carcasse est ici égale à la longueur des renforts inextensibles (selon une variante non montrée, cette longueur de couplage pourrait être inférieure).

De manière avantageuse et comme représenté ici, les extrémités radialement les plus à l'extérieur des renforts inextensibles et des renforts extensibles de l'armature de carcasse sont à des distances respectives D2 et D4 de l'axe de rotation du pneu. De même les extrémités radialement les plus à l'extérieur des renforts inextensibles et des renforts extensibles de l'armature additionnelle de renforcement de bourrelet sont à des distances respectives D1 et D3 de l'axe de rotation du pneu. Ces extrémités de l'armature de carcasse et de l'armature additionnelle sont étagées de manière à ce que l'on ait : D1<D2<D3<D4.

Bien entendu, on peut combiner avec une armature de carcasse bi matériaux selon l'invention une armature additionnelle de renforcement de bourrelet mono matériau.

L'invention n'est pas limitée aux exemples décrits et représentés et diverses modifications peuvent y être apportées sans sortir de son cadre. Ce type d'armature de renforcement peut être employée comme armature de renforcement quelconque d'un pneu et notamment pour le renforcement des sommets de pneu.

## Revendications

1. Armature de renforcement (10) de pneu ayant une structure bi matériaux de renforts constituée par au moins une pluralité de premiers renforts extensibles (1), et au moins une pluralité de deuxièmes renforts inextensibles (2), ces premiers et deuxièmes renforts étant parallèles entre eux et répartis d'une manière alternée en proportion appropriée pour atteindre le niveau de renforcement recherché, ces premiers et deuxièmes renforts étant situés dans une même surface moyenne, cette armature étant **caractérisée en ce que**, les premiers renforts extensibles (1) sont couplés aux deuxièmes renforts inextensibles (2) sur une longueur de couplage Lc qui est inférieure à la longueur L1 des premiers renforts extensibles (1), de manière que chacun des premiers et deuxièmes renforts ayant deux extrémités, l'une au moins des extrémités des premiers renforts extensibles (1) soit décalée par rapport aux deux extrémités des deuxièmes renforts inextensibles (2).

2. Armature de renforcement (10) de pneu selon la revendication 1 **caractérisée en ce que** le décalage entre une extrémité des premiers renforts extensibles (1) et une extrémité des deuxièmes renforts (2) est au moins égal à 15mm.

3. Armature de renforcement de pneu selon la revendication 1 ou la revendication 2 **caractérisée en ce que** l'angle B des premiers renforts extensibles (1), dans la partie située hors du couplage entre les premiers et les deuxièmes renforts, est différente de l'angle A des renforts (1, 2) dans la partie de couplage, ces angles étant pris par rapport à la direction de plus grande dimension de l'armature de renforcement.

4. Armature de renforcement (10) de pneu selon la revendication 3 **caractérisée en ce que** la différence entre les inclinaisons B des premiers renforts extensibles dans la partie située hors du couplage entre les premiers et les deuxièmes renforts et l'inclinaison A des renforts (1, 2) dans la partie de couplage est au plus égale à 60 degrés.

5. Armature de renforcement (10) de pneu selon l'une des revendications 1 à 4 **caractérisée en ce que** la longueur de couplage Lc entre les renforts extensibles et inextensible de ladite armature de renforcement est inférieure à la longueur des renforts inextensibles (2).

6. Pneu pour véhicule portant de lourdes charges comprenant une armature de carcasse radiale (102) constituée d'au moins une nappe caoutchoutée comprenant des renforts s'étendant radialement, chaque bourrelet comprenant au moins une armature de renforcement circonférentiel (101) autour de laquelle est enroulée en partie l'armature de carcasse (102) pour former un retournement (103) et au moins une armature additionnelle de renforcement (104), ce pneu étant **caractérisée en ce que** l'armature additionnelle de renforcement (104) a une structure bi matériaux constituée par une pluralité de premiers renforts extensibles (1), et une pluralité de deuxièmes renforts inextensibles (2), répartis en alternance et en proportion appropriée selon le niveau de renforcement recherché, ces premiers et deuxièmes renforts étant situés sensiblement sur une même surface moyenne et étant parallèles entre eux, les premiers renforts extensibles (1) étant couplés aux deuxièmes renforts inextensibles (2) dans une partie de couplage ayant une longueur Lc qui est inférieure à la longueur L1 des premiers renforts extensibles (1), de manière que, chacun des premiers et deuxièmes renforts ayant deux extrémités, l'une au moins des extrémités des premiers renforts extensibles (1) est décalée par rapport aux deux extrémités des deuxièmes renforts inextensibles (2).

7. Pneu selon la revendication 6 **caractérisé en ce que** l'extrémité radialement la plus à l'extérieur de l'armature additionnelle de renforcement (104) correspond à une extrémité des premiers renforts extensibles (1).

8. Pneu selon la revendication 7 **caractérisé en ce que** l'extrémité radialement la plus à l'extérieur des premiers renforts extensibles (1) est, dans un plan de coupe radial, à une distance D3 de l'axe de rotation qui est supérieure à la distance D2 de l'extrémité du retournement de l'armature de carcasse (103) par rapport au même axe de rotation.

9. Pneu selon l'une des revendications 6 à 8 **caractérisé en ce que** les premiers renforts extensibles (1) s'étendent radialement de part et d'autre des deuxièmes renforts inextensibles (2), la partie (1041') radialement la plus à l'intérieur des premiers renforts étant engagée au moins en partie radialement vers de la partie de l'armature de carcasse passant radialement à l'intérieur de l'armature de renforcement circonférentiel (101).

10. Pneu selon l'une des revendications 6 à 9 **caractérisé en ce que** les premiers renforts extensibles (1) dans les parties (1041, 1041') qui s'étendent respectivement radialement vers l'extérieur et vers l'intérieur des deuxièmes renforts inextensibles (2) s'étendent dans une même direction et selon un angle différent de l'angle des renforts dans la partie de couplage.

11. Pneu **caractérisé en ce qu'**il comprend au moins une armature de renforcement constituée d'une pluralité de renforts telle que définie à l'une quelconque des revendications 1 à 5.

## Claims

1. Tyre reinforcement (10) having a bi-material structure of reinforcing elements that consists of at least a plurality of extensible first reinforcing elements (1) and at least a plurality of inextensible second reinforcing elements (2), these first and second reinforcing elements being mutually parallel and distributed alternately in appropriate proportions in order to achieve the desired level of reinforcement, these first and second reinforcing elements lying within the same mean plane, this reinforcement being **characterized in that** the extensible first reinforcing elements (1) are coupled to the inextensible second reinforcing elements (2) over a coupling length Lc which is shorter than the length L1 of the extensible first reinforcing elements (1) so that, with each of the first and second reinforcing elements having two ends, at least one of the ends of the extensible first reinforcing elements (1) is offset in relation to the two ends of the inextensible second reinforcing elements (2).

2. Tyre reinforcement (10) according to Claim 1, **characterized in that** the offset between an end of the extensible first reinforcing elements (1) and an end of the second reinforcing elements (2) is at least 15 mm.

3. Tyre reinforcement according to Claim 1 or Claim 2, **characterized in that** the angle B of the extensible first reinforcing elements (1) in the part where there is no coupling between the first and second reinforcing elements is different from the angle A of the reinforcing elements (1, 2) in the coupling part, these angles being taken relative to the direction of greatest dimension of the reinforcement.

4. Tyre reinforcement (10) according to Claim 3, **characterized in that** the difference between the angles of inclination B of the extensible first reinforcing elements in the part where there is no coupling between the first and second reinforcing elements and the angle of inclination A of the reinforcing elements (1, 2) in the coupling part is at most 60°.

5. Tyre reinforcement (10) according to one of Claims 1 to 4, **characterized in that** the coupling length Lc, for coupling between the extensible and inextensible reinforcing elements of said reinforcement, is shorter than the length of the inextensible reinforcing elements (2).

6. Tyre for a vehicle carrying heavy loads, comprising a radial carcass reinforcement (102) consisting of at least one rubberized ply containing reinforcing elements extending radially, each bead comprising at least one circumferential reinforcement (101) around which the carcass reinforcement (102) is partly wound so as to form an upturn (103) and at least one additional reinforcement (104), this tyre being **characterized in that** the additional reinforcement (104) has a bi-material structure formed by a plurality of extensible first reinforcing elements (1) and a plurality of inextensible second reinforcing elements (2) distributed alternately and in appropriate proportions depending on the desired level of reinforcement, these first and second reinforcing elements lying substantially in the same mean plane and being mutually parallel, the extensible first reinforcing element (1) being coupled to the inextensible second reinforcing elements (2) in a coupling part having a length Lc which is shorter than the length L1 of the extensible first reinforcing elements (1) so that, with each of the first and second reinforcing elements having two ends, at least one of the ends of the extensible first reinforcing elements (1) is offset in relation to the two ends of the inextensible second reinforcing elements (2).

7. Tyre according to Claim 6, **characterized in that** the radially outermost end of the additional reinforcement (104) corresponds to an end of the extensible first reinforcing elements (1).

8. Tyre according to Claim 7, **characterized in that** the radially outermost end of the extensible first reinforcing elements (1) is, in a radial plane of section, at a distance D3 from the rotation axis which is greater than the distance D2 of the end of the carcass reinforcement upturn (103) relative to the same rotation axis.

9. Tyre according to one of Claims 6 to 8, **characterized in that** the extensible first reinforcing elements (1) extend radially on either side of the inextensible second reinforcing elements (2), the radially innermost part (1041') of the first reinforcing elements being at least partly engaged radially towards that part of the carcass reinforcement passing radially to the inside of the circumferential reinforcement (101).

10. Tyre according to one of Claims 6 to 9, **characterized in that** the extensible first reinforcing elements (1) in the parts (1041, 1041') that extend radially towards the outside and towards the inside, respectively, of the inextensible second reinforcing elements (2) extend in the same direction but at a different angle from the angle of the reinforcing elements in the coupling part.

11. Tyre, **characterized in that** it comprises at least one reinforcement consisting of a plurality of reinforcing elements as defined in any one of Claims 1 to 5.

## Patentansprüche

1. Reifenverstärkungsbewehrung (10) mit einer Struktur aus zwei Verstärkungsmaterialien, die aus mindestens einer Vielzahl erster dehnbarer Verstärkungen (1) und mindestens einer Vielzahl zweiter nicht dehnbarer Verstärkungen (2) besteht, wobei diese ersten und zweiten Verstärkungen parallel zueinander und abwechselnd in einem geeigneten Anteil verteilt sind, um den gesuchten Verstärkungsgrad zu erreichen, wobei diese ersten und zweiten Verstärkungen sich in der gleichen mittleren Fläche befinden, wobei diese Bewehrung **dadurch gekennzeichnet ist, dass** die ersten dehnbaren Verstärkungen (1) mit den zweiten nicht dehnbaren Verstärkungen (2) über eine Kopplungslänge Lc gekoppelt sind, die geringer als die Länge L1 der ersten dehnbaren Verstärkungen (1) ist, damit, da jede der ersten und zweiten Verstärkungen zwei Enden hat, mindestens eines der Enden der ersten dehnbaren Verstärkungen (1) bezüglich der zwei Enden der zweiten nicht dehnbaren Verstärkungen (2) versetzt ist.

2. Reifenverstärkungsbewehrung (10) nach Anspruch 1, **dadurch gekennzeichnet, dass** der Versatz zwischen einem Ende der ersten dehnbaren Verstärkungen (1) und einem Ende der zweiten Verstärkungen (2) mindestens gleich 15mm ist.

3. Reifenverstärkungsbewehrung nach Anspruch 1 oder Anspruch 2, **dadurch gekennzeichnet, dass** der Winkel B der ersten dehnbaren Verstärkungen (1) im außerhalb der Kopplung zwischen den ersten und zweiten Verstärkungen befindlichen Bereich sich vom Winkel A der Verstärkungen (1, 2) im Kopplungsbereich unterscheidet, wobei diese Winkel bezüglich der Richtung größter Abmessung der Verstärkungsbewehrung gemessen werden.

4. Reifenverstärkungsbewehrung (10) nach Anspruch 3, **dadurch gekennzeichnet, dass** die Differenz zwischen den Neigungen B der ersten dehnbaren Verstärkungen im außerhalb der Kopplung zwischen den ersten und zweiten Verstärkungen befindlichen Bereich und der Neigung A der Verstärkungen (1, 2) im Kopplungsbereich höchstens gleich 60 Grad ist.

5. Reifenverstärkungsbewehrung (10) nach einem der Ansprüche 1 bis 4, **dadurch gekennzeichnet, dass** die Kopplungslänge Lc zwischen den dehnbaren und nicht dehnbaren Verstärkungen der Verstärkungsbewehrung geringer als die Länge der nicht dehnbaren Verstärkungen (2) ist.

6. Reifen für ein schwere Lasten tragendes Fahrzeug, der eine radiale Karkassenbewehrung (102) enthält, die aus mindestens einer sich radial erstreckende Verstärkungen enthaltenden Kautschuklage besteht, wobei jeder Wulst mindestens eine Umfangsverstärkungsbewehrung (101), um die die Karkassenbewehrung (102) zum Teil gewickelt ist, um einen Umschlag (103) zu formen, und mindestens eine zusätzliche Verstärkungsbewehrung (104) enthält, wobei dieser Reifen **dadurch gekennzeichnet ist, dass** die zusätzliche Verstärkungsbewehrung (104) eine Struktur aus zwei Materialien hat, die aus einer Vielzahl erster dehnbarer Verstärkungen (1) und einer Vielzahl zweiter nicht dehnbarer Verstärkungen (2) besteht, die abwechselnd und in geeignetem Anteil gemäß dem gesuchten Verstärkungsgrad verteilt sind, wobei diese ersten und zweiten Verstärkungen sich im Wesentlichen auf der gleichen mittleren Fläche befinden und zueinander parallel sind, wobei die ersten dehnbaren Verstärkungen (1) mit den zweiten nicht dehnbaren Verstärkungen (2) in einem Kopplungsbereich mit einer Länge Lc gekoppelt sind, die geringer als die Länge L1 der ersten dehnbaren Verstärkungen (1) ist, damit, da jede der ersten und zweiten Verstärkungen zwei Enden hat, mindestens eines der Enden der ersten dehnbaren Verstärkungen (1) bezüglich der zwei Enden der zweiten nicht dehnbaren Verstärkungen (2) versetzt ist.

7. Reifen nach Anspruch 6, **dadurch gekennzeichnet, dass** das radial am weitesten außen liegende Ende der zusätzlichen Verstärkungsbewehrung (104) einem Ende der ersten dehnbaren Verstärkungen (1) entspricht.

8. Reifen nach Anspruch 7, **dadurch gekennzeichnet, dass** das radial am weitesten außen liegende Ende der ersten dehnbaren Verstärkungen (1) in einer radialen Schnittebene in einem Abstand D3 zur Drehachse ist, der größer ist als der Abstand D2 des Endes des Umschlags der Karkassenbewehrung (103) bezüglich der gleichen Drehachse.

9. Reifen nach einem der Ansprüche 6 bis 8, **dadurch gekennzeichnet, dass** die ersten dehnbaren Verstärkungen (1) sich radial zu beiden Seiten der zweiten nicht dehnbaren Verstärkungen (2) erstrecken, wobei der radial am weitesten innen liegende Bereich (1041') der ersten Verstärkungen zumindest teilweise radial zu dem Bereich der Karkassenbewehrung eingebunden ist, der radial innerhalb der Umfangsverstärkungsbewehrung (101) verläuft.

10. Reifen nach einem der Ansprüche 6 bis 9, **dadurch gekennzeichnet, dass** die ersten dehnbaren Verstärkungen (1) in den Bereichen (1041, 1041'), die sich radial nach außen bzw. nach innen der zweiten nicht dehnbaren Verstärkungen (2) erstrecken, sich in der gleichen Richtung und gemäß einem anderen Winkel als der Winkel der Verstärkungen im Kopplungsbereich erstrecken.

11. Reifen, **dadurch gekennzeichnet, dass** er mindestens eine Verstärkungsbewehrung enthält, die aus einer Vielzahl von Verstärkungen besteht, wie sie in einem der Ansprüche 1 bis 5 definiert ist.
